# DEMANDE DE BREVET EUROPEEN

(11) **EP 0 913 409 A1**
(43) Date de publication de la demande: **06.05.1999**
(21) Numéro de dépôt: 98402681.5
(22) Date de dépôt: 28.10.1998
(51) Int. Cl.: C08G 12/12

(54) **Procédé de fabrication de résines thermodurcissables urée-formol-ammoniaque et utilisation de ces résines en tant que résines d'imprégnation**

(30) Priorité: 30.10.1997 FR 9713644
(71) Demandeur: ELF ATOCHEM S.A., 92800 Puteaux, Hauts-de-Seine (FR)
(72) Inventeur: Lalo, Jack, 31400 Toulouse (FR); Garrigue, Roger, 31000 Toulouse (FR)
(74) Mandataire: Rieux, Michel

(57) **Abrégé**

Ce procédé consiste (a) à faire réagir de l'urée, du formol et de l'ammoniaque à un rapport molaire formol/groupements NH₂ de 1,5-2,5, à un rapport molaire ammoniaque sur urée de 0,25-1, à 80-100°C, et pendant 30-90 min., puis (b) à ajouter de l'urée pour abaisser le rapport molaire formol/groupements NH₂ à 1,15-1,35, cette phase d'addition réalisée à une température proche du reflux et s'accompagnant d'une chute du pH étant suivie par la réaction de condensation réalisée à 90-100°C, jusqu'à ce qu'un test d'arrêt soit atteint dont la valeur dépend de la concentration en matières actives du milieu et de la viscosité de la résine terminée, cette viscosité devant être compatible avec une bonne imprégnabilité ; et (c), après refroidissement du milieu réactionnel, à ajouter du formol pour remonter le rapport molaire formol/groupements NH₂ à 1,4-1,9, à 50-70°C, pendant 30-90 min. ; puis (d) à ajouter de l'urée afin d'obtenir un rapport molaire final formol/groupements NH₂ correspondant à celui de la résine finie de 0,45-0,85, à 20-60°C pendant une durée pouvant aller jusqu'à 90 min. ; les groupements NH₂ indiqués comprenant les moles d'urée et les moles d'ammoniaque.

## Description

La présente invention porte sur un procédé de préparation de résines thermodurcissables, ainsi que sur l'utilisation de ces résines en tant que résines d'imprégnation.

Les résines ci-dessus se présentent sous la forme de solutions aqueuses, ces solutions servant à l'imprégnation de matériaux supports absorbants, tels que le papier qui entre dans la fabrication des stratifiés.

Pour la mise en oeuvre de ces résines d'imprégnation, on prépare des mélanges d'imprégnation comprenant un condensat (ou précondènsat) de résine, un agent de durcissement latent, tel qu'un sel d'amine, et, le cas échéant, des adjuvants usuels, tels qu'agents démoulants, agents mouillants, solvants, plastifiants et opacifiants. Les agents de durcissement utilisés sont tels qu'après avoir été ajoutés aux résines, ils laissent des temps de mise en oeuvre suffisants à la température ambiante, et, en même temps, permettent d'atteindre des durcissements extrêmement courts aux températures de mise en oeuvre, c'est-à-dire à des températures de l'ordre de 100 à 200°C.

Les résines d'imprégnation doivent, en elles-mêmes, présenter une bonne stabilité, une bonne réactivité et une compatibilité avec les adjuvants classiques mentionnés ci-dessus.

Le but essentiel visé est celui d'obtenir des résines stables - c'est-à-dire qui restent limpides -, tout en conservant leurs propriétés d'imprégnation et leur réactivité. Les caractéristiques visées pour de telles résines sont notamment les suivantes :
- Viscosité à 20°C (mPa.s) = 10-100
- Extrait sec (%) = 45-55
- Temps de gel à 80°C (sec.) = > 100 ; < 200
- Stabilité minimale à 20°C (jours) = > 21
- Stabilité minimale à 30°C (jours) = > 8.

La condensation de l'urée, du formol et de l'ammoniaque est connue et conduit à la formation de cycles triazinones dont la structure est la suivante : 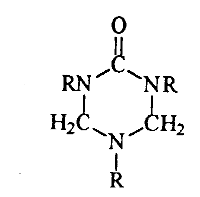 avec R = H, CH₂-OH, CH₂-
et dont on peut estimer qu'ils peuvent contribuer à augmenter la stabilité des résines. La présence de ces cycles est toutefois connue pour donner des résines peu réactives. A la connaissance de la Société déposante, aucun document de la littérature ne fait mention de la préparation de résines urée-formol-ammoniaque qui sont à la fois stables et réactives.

La Société déposante a maintenant découvert un procédé à l'ammoniaque qui permet pourtant d'atteindre les objectifs visés. Les conditions de ce procédé n'étaient pas évidentes, ainsi que l'attestent les nombreuses comparaisons effectuées dans les Exemples ci-après.

La présente invention a donc d'abord pour objet un procédé de fabrication de résines thermodurcissables urée-formol-ammoniaque, caractérisé par le fait qu'il comprend les étapes consistant à :
(a) faire réagir de l'urée, du formol et de l'ammoniaque
   - à un rapport molaire formol sur groupements NH₂ compris entre 1,5 et 2,5, de préférence compris entre 1,7 et 2 ;
   - à un rapport molaire ammoniaque sur urée compris entre 0,25 et 1, de préférence compris entre 0,25 et 0,75 ;
   - à une température comprise entre 80 et 100°C ; et
   - pendant un temps compris entre 30 minutes et 90 minutes ; puis
(b) ajouter de l'urée pour abaisser le rapport molaire formol sur groupements NH₂ à une valeur comprise entre 1,15 et 1,35, de préférence comprise entre 1,2 et 1,3, ladite phase d'addition réalisée à une température proche du reflux et s'accompagnant d'une chute du pH étant suivie par la réaction de condensation réalisée à une température comprise entre 90 et 100°C, jusqu'à ce qu'un test d'arrêt soit atteint dont la valeur dépend de la concentration en matières actives du milieu et de la viscosité de la résine terminée, ladite viscosité devant être compatible avec une bonne imprégnabilité ; et
(c) après refroidissement du milieu réactionnel, ajouter du formol afin de remonter le rapport molaire formol sur groupements NH₂ à une valeur comprise entre 1,4 et 1,9, à une température comprise entre 50 et 70°C, pendant une durée comprise entre 30 et 90 minutes ; puis
(d) ajouter de l'urée afin d'obtenir un rapport molaire final formol sur groupements NH₂ correspondant à celui de la résine finie qui est compris entre 0,45 et 0,85, à une température comprise entre 20 et 60°C pendant un laps de temps pouvant aller jusqu'à 90 minutes,
lesdits groupements NH₂ indiqués dans toutes les étapes ci-dessus comprenant les moles d'urée et les moles d'ammoniaque.

A l'étape (a), on peut ajouter l'ammoniaque au départ ou bien au fur et à mesure de l'avancement de la réaction.

A cette même étape (a), on peut ajouter du métabisulfite de sodium au milieu, à raison de 0,25 à 0,75% en poids par rapport à la résine totale.

L'étape (a) est généralement conduite à un pH d'environ 6 à 8, le pH à cette étape étant conditionné par la présence de l'ammoniaque.

Conformément à un mode de réalisation particulier de l'étape (b), on ajoute l'urée à une température de 60 à 90°C, à un pH de l'ordre de 6-7, pendant 5-25 mn, le pH chutant alors à une valeur de l'ordre de 4-5, à laquelle est réalisée la condensation, laquelle est arrêtée lorsque la viscosité à 20°C de la résine est de 50-150 mPa.s.

A l'étape (d), on ajoute généralement l'urée à une température de l'ordre de 20 à 60°C. Lorsque l'urée est introduite à 20°C, le temps n'est pas un facteur important : il doit correspondre au temps de dissolution de l'urée. A cette même étape, on peut ajouter de l'eau de façon à obtenir un extrait sec de 45-65%.

La présente invention porte également sur l'utilisation de la résine urée-formol-ammoniaque obtenue par le procédé tel que défini ci-dessus comme résine aminoplaste thermodurcissable d'imprégnation.

Les Exemples suivants illustrent la présente invention sans toutefois en limiter la portée. Dans ces exemples, les pourcentages sont donnés en poids sauf indication contraire. La détermination du formol libre dans les résines a été effectuée d'après le mode opératoire décrit par F. Käsbaur, D. Merkel et O. Wittmann dans Z. Anal. Chem. 281, 17-21 (1976).

### EXEMPLE 1 (comparatif) : Mode opératoire de préparation de la résine A

Dans un réacteur de 2 litres, surmonté d'un réfrigérant à reflux et muni d'une sonde de température et d'une sonde pHmétrique, on introduit 818,2 g de solution de formol à 44% (12 moles), 32,7 g d'ammoniaque à 19,5% (0,375 mole) et 180 g d'urée (3 moles). On chauffe le milieu réactionnel à la température de 90°C pendant 30 minutes, tout en maintenant la valeur du pH à 7 par addition de soude (solution aqueuse à 10% p/p).

On ajoute 108 g d'urée (1,8 mole), puis on chauffe à la température de 98°C, pendant 20 minutes, tout en maintenant la valeur du pH au-dessus de 6.

On refroidit le milieu réactionnel à la température de 95°C, puis on ajuste la valeur du pH à 4,2 par addition d'une solution d'acide formique (10% p/p).

On suit la réaction de condensation par la mesure de la viscosité à 20°C.

| | | | | |
|---|---|---|---|---|
| Temps (minutes) | 10 | 25 | 40 | 55 |
| Viscosité (mPa.s) | 21 | 35 | 58 | 95 |

Dès que le test d'arrêt est atteint, on remonte la valeur du pH à 7 par addition de soude et on refroidit le milieu réactionnel à la température de 20°C.

On ajoute 265 g d'urée (4,4 moles), puis on ajuste la valeur du pH à 8,5.

Les différentes étapes du procédé sont résumées dans le Tableau 1 ci-après ; dans le Tableau 2 ci-après, figurent les propriétés et l'analyse de la résine A.

### EXEMPLES 2-1 ; 2-2 et 2-3 (comparatifs) : Mode opératoire de préparation des résines B1, B2 et B3

Dans un réacteur de 2 litres, surmonté d'un réfrigérant à reflux et muni d'une sonde de température et d'une sonde de pH, on introduit 818,2 g de solution aqueuse de formol à 44% (12 moles), 65 g d'ammoniaque à 19,5% (0,75 mole) et 157,5 g d'urée (2,62 moles). On chauffe le milieu réactionnel à la température de 90°C pendant 30 minutes, tout en maintenant la valeur du pH à 7 par addition de soude (solution aqueuse à 10% p/p).

On ajoute 108 g d'urée (1,8 mole), puis on chauffe à la température de 98°C pendant 20 minutes tout en maintenant la valeur du pH au-dessus de 6.

On refroidit le milieu réactionnel à la température de 94°C, puis on ajuste la valeur du pH à 4,3 par addition d'une solution d'acide formique (10% p/p).

On suit la réaction de condensation par la mesure de la viscosité à 20°C.

| | | | | | | |
|---|---|---|---|---|---|---|
| Temps (minutes) | 0 | 30 | 60 | 90 | 105 | 120 |
| Viscosité (mPa.s) | 10 | 26 | 42 | 56 | 61 | 75 |

Dès que le test d'arrêt est atteint, on remonte la valeur du pH à 7 par addition de soude et on refroidit le milieu réactionnel à la température de 20°C. Le milieu réactionnel est divisé en trois parties pour donner trois résines à différents rapports molaires formol sur urée par des additions différentes d'urée.

Les différentes étapes du procédé sont résumées dans le Tableau 1 ci-après ; dans le Tableau 2 ci-après, figurent les propriétés et l'analyse des résines B1, B2 et B3.

### EXEMPLES 3-1 ; 3-2 et 3-3 (comparatifs) : Mode opératoire de préparation des résines C1, C2 et C3

Dans un réacteur de 2 litres, surmonté d'un réfrigérant à reflux et muni d'un agitateur, d'une sonde pHmétrique et d'un thermomètre, on introduit 818,2 g d'une solution aqueuse de formol à 44% (12 moles) et 180 g d'urée (3 moles). On chauffe le milieu réactionnel à la température de 90°C pendant 60 minutes, tout en maintenant la valeur du pH à 5 par addition de soude (solution aqueuse de 10% p/p).

Après avoir remonté la valeur du pH à 6,5 par addition de soude, on ajoute 108 g d'urée (1,8 mole). On chauffe à la température de 98°C pendant 20 minutes, tout en maintenant le pH au-dessus de 6.

On refroidit le milieu réactionnel à la température de 94°C, puis on ajuste la valeur du pH à 4,2 par addition d'une solution aqueuse d'acide formique (10% p/p).

On suit la réaction de condensation par la mesure de la viscosité à 20°C.

| | | | |
|---|---|---|---|
| Temps (minutes) | 15 | 25 | 35 |
| Viscosité (mPa.s) | 31 | 40 | 47 |

Dès que le test d'arrêt est atteint, on remonte la valeur du pH à 6,9 par addition de soude (solution aqueuse à 10% p/p) et on refroidit le milieu réactionnel à la température de 20°C.

Le milieu réactionnel est divisé en trois parties pour donner trois résines à différents rapports molaires formol sur urée par addition de quantités différentes d'urée.

Les différentes étapes du procédé sont résumées dans le Tableau 1 ci-après ; dans le Tableau 2 ci-après, figurent les propriétés et l'analyse des résines C1, C2 et C3.

### EXEMPLES 4-1 ; 4-2 et 4-3 (comparatifs) : Mode opératoire de préparation des résines D1, D2 et D3

Dans un réacteur de 2 litres, surmonté d'un réfrigérant à reflux et muni d'un agitateur, d'une sonde de température et d'une sonde de pH, on introduit 818,2 g de solution aqueuse de formol à 44% (12 moles), 130 g d'ammoniaque à 19,5% (1,5 mole) et 135 g d'urée (2,25 moles). On chauffe le milieu réactionnel à la température de 90°C pendant 60 minutes tout en laissant chuter le pH.

| | | | | | |
|---|---|---|---|---|---|
| Temps (minutes) | 0 | 15 | 30 | 45 | 60 |
| pH | 7,5 | 6,9 | 6,7 | 6,64 | 6,63 |

On ajoute 108 g d'urée (1,8 mole), puis on chauffe à la température de 98°C pendant 10 minutes. Le pH dans cette phase passe de 6,5 à 6,3.

On refroidit le milieu réactionnel à la température de 92°C et on laisse chuter le pH. On suit la réaction de condensation par la mesure de la viscosité à 20°C.

| | | | | | | | | |
|---|---|---|---|---|---|---|---|---|
| Temps (minutes) | 20 | 40 | 60 | 80 | 100 | 120 | 140 | 160 |
| pH | 5,9 | 5,25 | 4,65 | 4,35 | 4,31 | 4,3 | 4,3 | 4,3 |
| Viscosité (mPa.s) | 7 | 8,3 | 9,5 | 13 | 18 | 24 | 35 | 51 |

Dès que le test d'arrêt est atteint, on remonte la valeur du pH à 6,9 par addition de soude (solution aqueuse à 10% p/p) et on refroidit le milieu réactionnel à la température de 20°C.

Le milieu réactionnel est divisé en trois parties pour donner trois résines à différents rapports molaires formol sur urée par addition de quantités différentes d'urée.

Les différentes étapes du procédé sont résumées dans le Tableau 1 ci-après ; dans le Tableau 2 ci-après, figurent les propriétés et l'analyse des résines D1, D2 et D3.

### EXEMPLES 5-1 (comparatif) ; 5-2 (de l'invention) et 5-3 (comparatif) : Mode opératoire de préparation des résines E1, E2 et E3

Dans un réacteur de 4 litres, surmonté d'un réfrigérant à reflux et muni d'un agitateur, d'une sonde de température et d'une sonde de pH, on introduit 2457 g de solution aqueuse de formol à 44% (36 moles) et 473 g d'urée (7,9 moles) après avoir ajusté la valeur du pH à 5,7 par addition de soude (solution aqueuse à 10% p/p). On chauffe le milieu réactionnel à 60°C, puis on ajoute goutte à goutte 314,5 g d'ammoniaque à 24% (4,44 moles). L'addition de l'ammoniaque étant exothermique, la température du milieu réactionnel monte à 97°C. On refroidit à la température de 90°C et on poursuit l'addition de l'ammoniaque tout en maintenant la température à 90°C. Après 1 heure de réaction, on refroidit à la température de 70°C, puis on ajoute 258 g d'urée (4,3 moles). On chauffe le milieu réactionnel à la température de 98°C pendant 10 minutes tout en laissant chuter le pH. On refroidit le milieu à la température de 90°C, et on suit la réaction de condensation par la mesure de la viscosité à 20°C.

| | | | | |
|---|---|---|---|---|
| Temps (minutes) | 0 | 40 | 65 | 185 |
| pH | 5,65 | 4,1 | 4 | 4,1 |
| Viscosité (mPa.s) | -- | 11 | 22 | 50 |

Dès que le test d'arrêt est atteint, on remonte la valeur du pH à 6,9 par addition de soude et on partage le milieu réactionnel en trois parties égales.
- La première partie est refroidie à 20°C et une quantité d'urée est ajoutée telle que le rapport molaire formol sur NH₂ final soit de 0,84 - (E1) ;
- la deuxième partie est retirée à 60°C. A 800 g de ce milieu réactionnel (formol : 8,23 moles ; urée 2,8 moles ; NH₃ 1 mole), sont ajoutés 111,8 g d'une solution aqueuse de formol à 44% (1,64 mole). Le milieu réactionnel est laissé à cette température pendant 1 heure. On refroidit à la température de 20°C, puis on ajoute 155 g d'urée (2,6 moles). On rajuste la valeur du pH à 8,5 si nécessaire - (E2) ;
- la troisième partie est refroidie à 60°C. A 800 g de ce milieu réactionnel (formol : 8,23 moles ; urée : 2,8 moles ; NH₃ : mole), sont ajoutés 336,1 g de solution aqueuse de formol à 44% (4,93 moles). Le milieu réactionnel est laissé à cette température pendant 1 heure. On refroidit à la température de 20°C, puis on ajoute 272,7 g d'urée (4,55 moles). On rajuste la valeur du pH à 8,5 si nécessaire - (E3).

Les différentes étapes du procédé sont résumées dans le Tableau 1 ci-après ; dans le Tableau 2 ci-après, figurent les propriétés et l'analyse des résines El, E2 et E3.

### Résine E2

Spectre de RMN ¹³C (DMSO D6) : les pics identifiés comme appartenant aux cycles triazinones ont comme déplacements chimiques (δ ppm) :
57,5 ppm (méthylène)
69,5 ppm (méthylols)
156,4 156,8 ppm (carbonyle)

### EXEMPLES 6-1 ; 6-2 et 6-3 : Mode opératoire de préparation des résines F1, F2 et F3

Dans un réacteur de 4 litres, surmonté d'un réfrigérant à reflux et muni d'un agitateur, d'une sonde de température et d'une sonde de pH, on introduit 2457 g de solution aqueuse de formol à 44% (36 moles), 419 g d'ammoniaque à 18% (4,44 moles) et 473 g d'urée (7,89 moles). On chauffe le milieu réactionnel à la température de 90°C pendant 60 minutes tout en laissant chuter le pH. On refroidit le milieu réactionnel à la température de 70°C, puis on ajoute 258 g d'urée (4,3 moles). On chauffe le milieu réactionnel à la température de 98°C pendant 10 minutes, tout en laissant chuter le pH, celui-ci étant à 5,65 en fin de palier. On refroidit le milieu à la température de 90°C et on suit la réaction de condensation par la mesure de la viscosité à 20°C.

| | | | | | |
|---|---|---|---|---|---|
| Temps (minutes) | 10 | 110 | 170 | 200 | 210 |
| pH | 4,6 | 4,3 | 4,35 | 4,4 | 4,4 |
| Viscosité (mPa. s) | 8 | 19 | 36 | 44 | 47 |

Dès que le test d'arrêt est atteint, on remonte la valeur du pH à 6,9 par addition de soude (solution aqueuse à 10% p/p) et on refroidit le milieu réactionnel à la température de 60°C. On ajoute 795 g de solution aqueuse de formol à 44% (7,3 moles) et on laisse le milieu réactionnel à la température de 60°C pendant 1 heure. On refroidit le milieu réactionnel à 20°C et on le divise en trois parties pour donner trois résines à différents rapports molaires formol sur urée par addition de quantités différentes d'urée.

Les différentes étapes du procédé sont résumées dans le Tableau 1 ci-après ; dans le Tableau 2 ci-après, figurent les propriétés et l'analyse des résines F1, F2 et F3.

### EXEMPLES 7-1 ; 7-2 et 7-3 : Mode opératoire de préparation des résines G1, G2 et G3

Dans un réacteur de 4 litres, surmonté d'un réfrigérant à reflux et muni d'un agitateur, d'une sonde de température et d'une sonde de pH, on introduit 2457 g de solution aqueuse de formol à 44% (36 moles), 419 g d'ammoniaque à 18% (4,44 moles) et 473 g d'urée (7,9 moles). On chauffe le milieu réactionnel à la température de 90°C pendant 60 minutes tout en laissant chuter le pH. On refroidit le milieu réactionnel à la température de 70°C, puis on ajoute 258 g d'urée (4,3 moles). On chauffe le milieu réactionnel à la température de 98°C pendant 10 minutes tout en laissant chuter le pH, celui-ci étant à 5,65 en fin de palier. On refroidit le milieu à la température de 90°C et on suit la réaction de condensation par la mesure de la viscosité à 20°C.

Dès que le test d'arrêt est atteint (50 mPa.s à 20°C), on remonte la valeur du pH à 6,9 par addition de soude (solution aqueuse à 10% p/p) et on refroidit le milieu réactionnel à la température de 60°C. On ajoute 888 g de solution aqueuse de formol à 44% (13 moles) et on laisse le milieu réactionnel à la température de 60°C pendant 1 heure. On refroidit le milieu réactionnel à 20°C et on le divise en trois parties pour donner trois résines à différents rapports molaires formol sur urée par addition de quantités différentes d'urée.

Les différentes étapes du procédé sont résumées dans le Tableau 1 ci-après ; dans le Tableau 2 ci-après, figurent les propriétés et l'analyse des résines G1, G2 et G3.

### EXEMPLES 8-1 et 8-2 : Mode opératoire de préparation des résines H1 et H2

Dans un réacteur de 4 litres, surmonté d'un réfrigérant à reflux et muni d'un agitateur, d'une sonde de température et d'une sonde de pH, on introduit 2457 g de solution aqueuse de formol à 44% (36 moles), 419 g d'ammoniaque à 18% (4,44 moles) et 473 g d'urée (7,9 moles). On chauffe le milieu réactionnel à la température de 90°C pendant 60 minutes, tout en laissant chuter le pH. On refroidit le milieu réactionnel à la température de 70°C, puis on ajoute 258 g d'urée (4,3 moles). On chauffe le milieu réactionnel à la température de 98°C pendant 10 minutes tout en laissant chuter le pH, celui-ci étant à 5,56 en fin de palier. On refroidit le milieu réactionnel à la température de 95°C et on suit la réaction de condensation par la mesure de la viscosité à 20°C.

| | | | | |
|---|---|---|---|---|
| Temps (minutes) | 0 | 20 | 90 | 120 |
| pH | 5,56 | 4,26 | 4,26 | 4,34 |
| Viscosité (mPa.s) | -- | 9 | 28 | 49 |

Dès que le test d'arrêt est atteint, on remonte la valeur du pH à 6,9 par addition de soude (solution aqueuse à 10% p/p) et on refroidit le milieu réactionnel à la température de 60°C. On ajoute 888 g de solution aqueuse de formol à 44% (13 moles) et on laisse le milieu réactionnel à la température de 60°C pendant 1 heure.
- Sur une partie, on ajoute de l'urée à 60°C en quantité telle que le rapport molaire formol sur NH₂ soit de 0,75, puis on laisse à 40°C pendant 45 minutes. On refroidit à 25°C, puis on ajuste le pH si nécessaire à 8,5 - (H1) ;
- sur une deuxième partie, on refroidit à 20°C, puis on ajoute de l'urée en quantité telle que le rapport molaire formol sur NH₂ soit de 0,75, puis on rajuste le pH si nécessaire à 8,5 - (H2).

Les différentes étapes du procédé sont résumées dans le Tableau 1 ci-après ; dans le Tableau 2 ci-après, figurent les propriétés et l'analyse des résines H1, H2.

### EXEMPLES 9-1 et 9-2 : Mode opératoire de préparation des résines I1 et I2

Dans un réacteur de 4 litres, surmonté d'un réfrigérant à reflux et muni d'un agitateur, d'une sonde de température et d'une sonde de pH, on introduit 2162 g de solution aqueuse de formol à 50% (36 moles), 377 g d'ammoniaque à 20% (4,44 moles) et 473 g d'urée (7,9 moles). On chauffe le milieu réactionnel à la température de 90°C pendant 60 minutes tout en laissant chuter le pH. On refroidit le milieu réactionnel à la température de 70°C, puis on ajoute 258 g d'urée (4,3 moles). On chauffe le milieu réactionnel à la température de 98°C pendant 10 minutes tout en laissant chuter le pH, celui-ci étant à 5,55 en fin de palier. On refroidit le milieu réactionnel à la température de 95°C et on suit la réaction de condensation par la mesure de la viscosité à 20°C.

| | | | | | |
|---|---|---|---|---|---|
| Temps (minutes) | 0 | 20 | 55 | 60 | 70 |
| pH | 5,5 | 4,2 | 4,1 | 4,1 | 4,1 |
| Viscosité (mPa.s) | | 13 | 42 | 60 | 71 |

Dès que le test d'arrêt est atteint, on remonte la valeur du pH à 6,9 par addition de soude (solution aqueuse à 10% p/p) et on refroidit le milieu réactionnel à la température de 60°C. On ajoute 777 g de solution aqueuse de formol à 50% (13 moles) et on laisse le milieu réactionnel à la température de 60°C pendant 1 heure.
- Sur une partie, on ajoute de l'urée à 60°C en quantité telle que le rapport molaire formol sur NH₂ soit de 0,75, puis on laisse à 40°C pendant 45 minutes. On refroidit à 20°C, puis on ajuste le pH si nécessaire à 8,5 - (I1).
- Sur une deuxième partie, on refroidit à 20°C, puis on ajoute de l'urée en quantité telle que le rapport molaire formol sur NH₂ soit de 0,75, puis on rajuste le pH si nécessaire à 8,5 - (I2).

Les différentes étapes du procédé sont résumées dans le Tableau 1 ci-après ; dans le Tableau 2 ci-après, figurent les propriétés et l'analyse des résines I1, I2.

### EXEMPLES 10-1 ; 10-2 ; 10-3 et 10-4 : Mode opératoire de préparation des résines J1 et J2 et des résines J'1 et J'2

Dans un réacteur de 4 litres surmonté d'un réfrigérant à reflux et muni d'un agitateur, d'une sonde de température et d'une sonde de pH, on introduit 2162 g de solution aqueuse de formol à 50% (36 moles), 25 g de métabisulfite de sodium (Na₂S₂O₅), 377 g d'ammoniaque à 20% (4,44 moles) et 473 g d'urée (7,9 moles). On chauffe le milieu réactionnel à la température de 90°C pendant 60 minutes tout en laissant chuter le pH. On refroidit le milieu réactionnel à la température de 70°C, puis on ajoute 258 g d'urée (4,3 moles). On chauffe le milieu réactionnel à la température de 98°C pendant 10 minutes tout en laissant chuter le pH, celui-ci étant à 5,67 en fin de palier. On refroidit le milieu réactionnel à la température de 95°C et on suit la réaction de condensation par la mesure de la viscosité à 20°C.

| | | | | | |
|---|---|---|---|---|---|
| Temps (minutes) | 5 | 25 | 70 | 90 | 105 |
| pH | 5,55 | 4,5 | 4,5 | 4,5 | 4,5 |
| Viscosité (mPa.s) | 10 | 15 | 53 | 90 | 124 |

Dès que le test d'arrêt est atteint, on remonte la valeur du pH à 6,9 par addition de soude (solution aqueuse à 10% p/p) et on refroidit le milieu réactionnel à la température de 60°C. On ajoute 777 g de solution aqueuse de formol à 50% (13 moles) et on laisse le milieu réactionnel à la température de 60°C pendant 1 heure.
- Sur une partie, on ajoute de l'urée à 60°C en quantité telle que le rapport molaire formol sur NH₂ soit de 0,75, puis on laisse à 40°C pendant 45 minutes. On refroidit à 20°C, puis on ajuste le pH si nécessaire à 8,5 - (J1).
- Sur une deuxième partie, on refroidit à 20°C, puis on ajoute de l'urée en quantité telle que le rapport molaire formol sur NH₂ soit de 0,75, puis on rajuste le pH si nécessaire à 8,5 - (J2).

De l'eau est ajoutée à J1 et à J2 afin d'obtenir un extrait sec (2 heures à l'étuve à 120°C) de 50% - (J'1) et (J'2).

Les différentes étapes du procédé sont résumées dans le Tableau 1 ci-après ; dans le Tableau 2 ci-après, figurent les propriétés et l'analyse des résines J1, J2, J'1 et J'2.

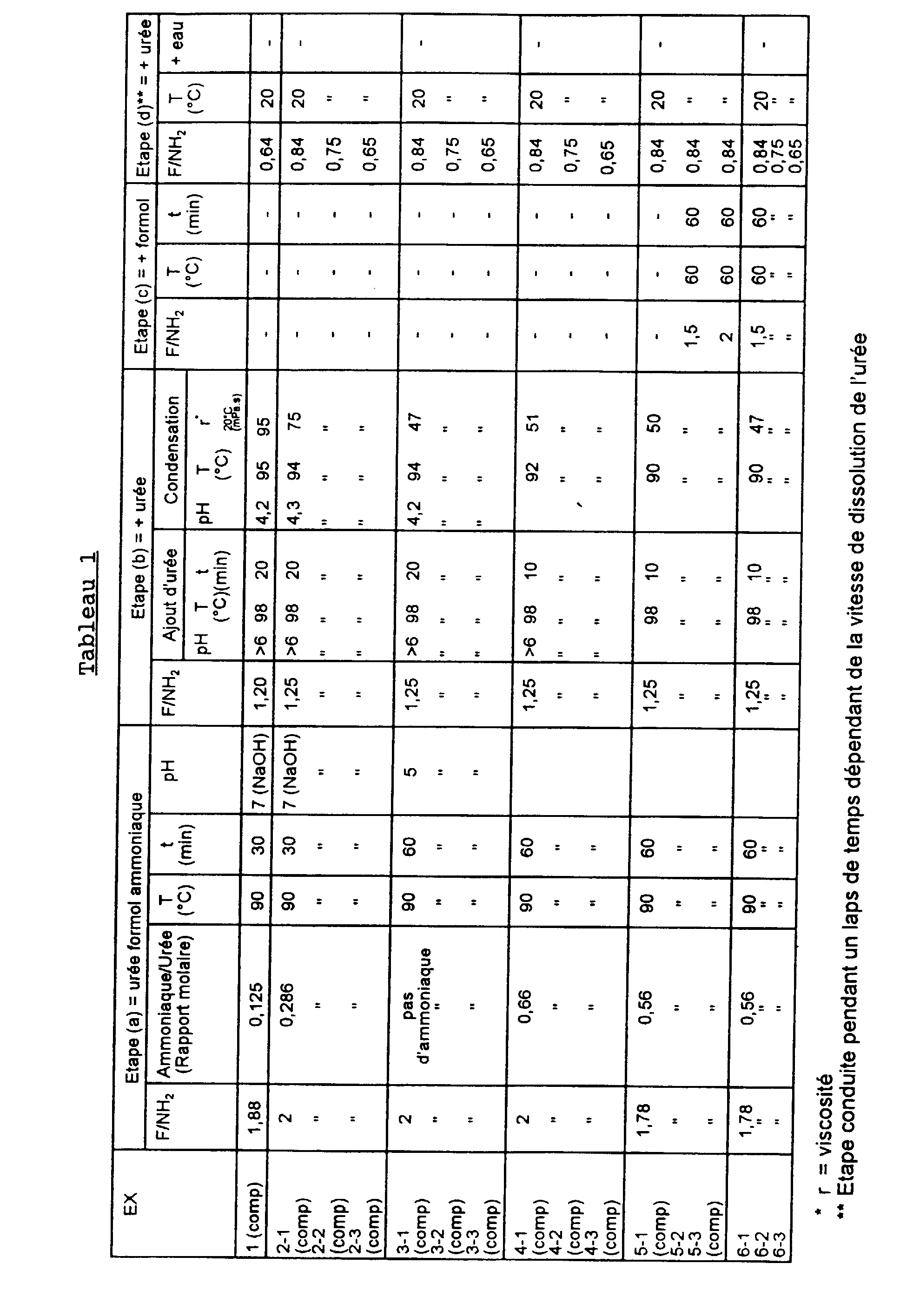

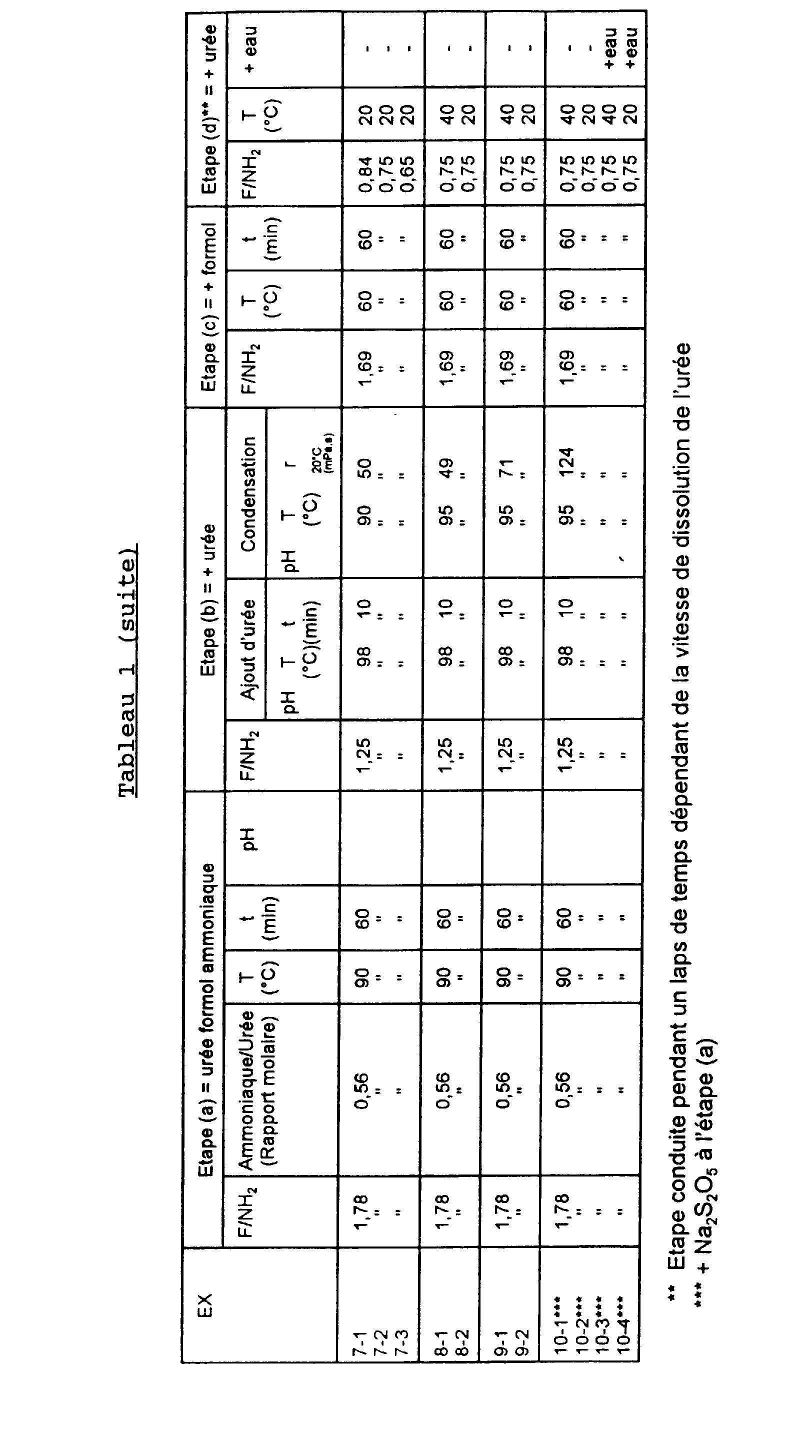

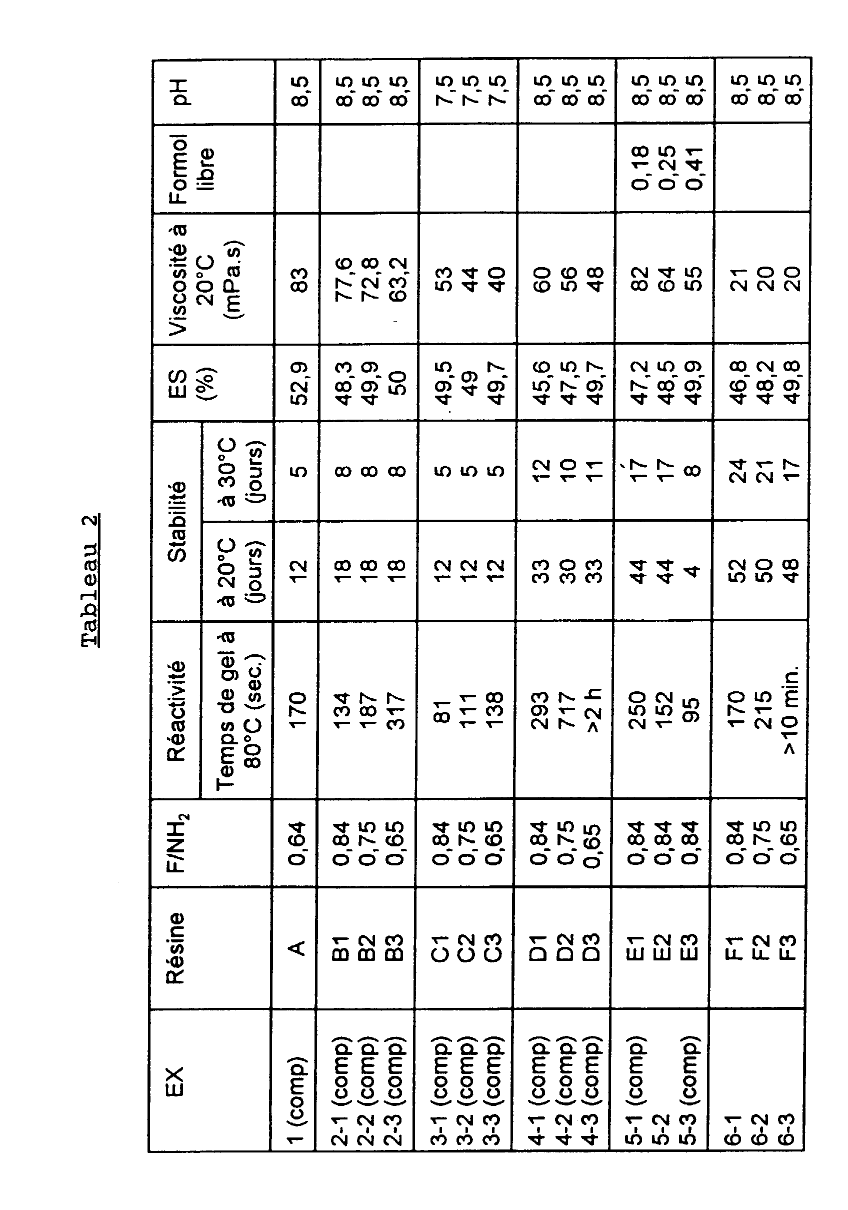

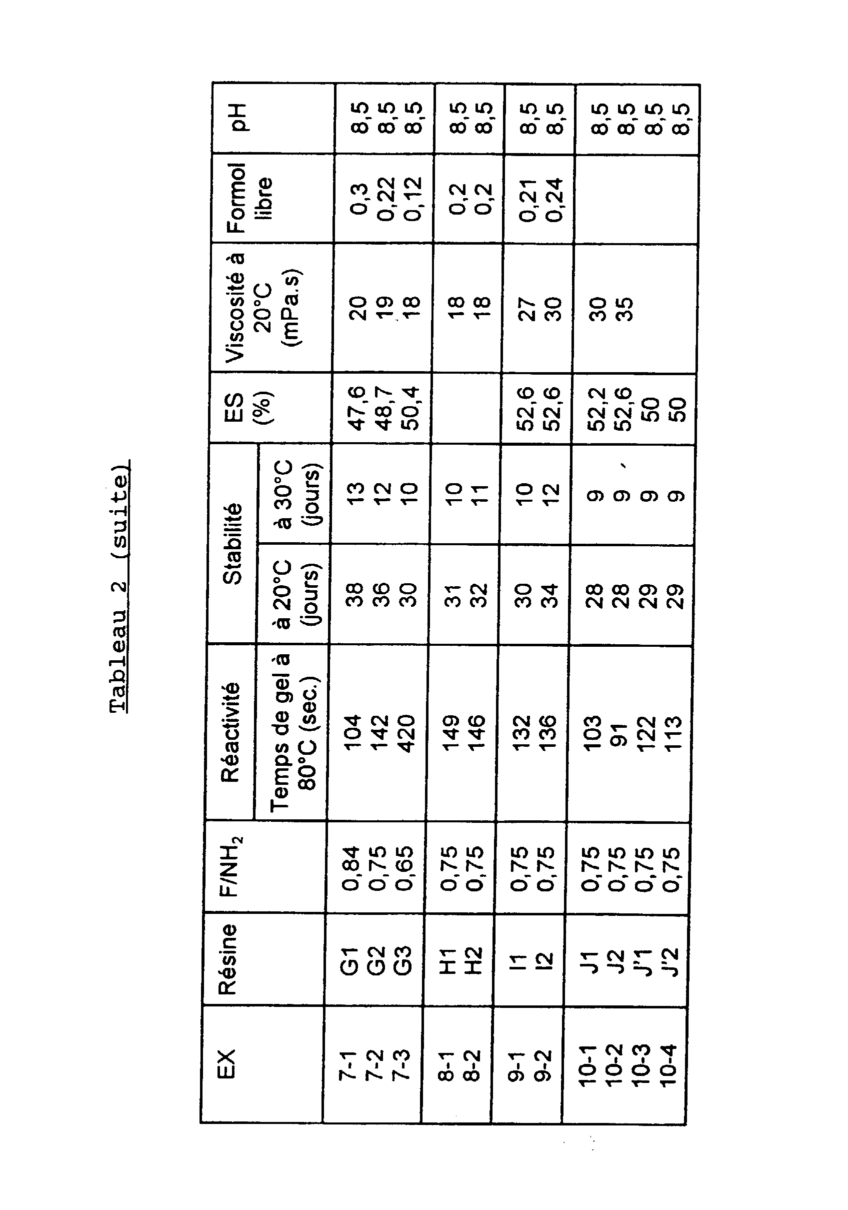

## Revendications

1. Procédé de fabrication de résines thermodurcissables urée-formol-ammoniaque, caractérisé par le fait qu'il comprend les étapes consistant à :
(a) faire réagir de l'urée, du formol et de l'ammoniaque
- à un rapport molaire formol sur groupements NH₂ compris entre 1,5 et 2,5 ;
- à un rapport molaire ammoniaque sur urée compris entre 0,25 et 1 ;
- à une température comprise entre 80 et 100°C ; et
- pendant un temps compris entre 30 minutes et 90 minutes, puis
(b) ajouter de l'urée pour abaisser le rapport molaire formol sur groupements NH₂ à une valeur comprise entre 1,15 et 1,35, ladite phase d'addition réalisée à une température proche du reflux et s'accompagnant d'une chute du pH étant suivie par la réaction de condensation réalisée à une température comprise entre 90 et 100°C, jusqu'à ce qu'un test d'arrêt soit atteint dont la valeur dépend de la concentration en matières actives du milieu et de la viscosité de la résine terminée, ladite viscosité devant être compatible avec une bonne imprégnabilité ; et
(c) après refroidissement du milieu réactionnel, ajouter du formol afin de remonter le rapport molaire formol sur groupements NH₂ à une valeur comprise entre 1,4 et 1,9, à une température comprise entre 50 et 70°C, pendant une durée comprise entre 30 et 90 minutes ; puis
(d) ajouter de l'urée afin d'obtenir un rapport molaire final formol sur groupements NH₂ correspondant à celui de la résine finie qui est compris entre 0,45 et 0,85, à une température comprise entre 20 et 60°C pendant un laps de temps pouvant aller jusqu'à 90 minutes,
lesdits groupements NH₂ indiqués dans toutes les étapes ci-dessus comprenant les moles d'urée et les moles d'ammoniaque.

2. Procédé selon la revendication 1, caractérisé par le fait qu'à l'étape (a), on fait réagir l'urée, le formol et l'ammoniaque à un rapport molaire formol sur groupements NH₂ compris entre 1,7 et 2.

3. Procédé selon l'une des revendications 1 et 2, caractérisé par le fait qu'à l'étape (a), on fait réagir l'urée, le formol et l'ammoniaque à un rapport molaire ammoniaque sur urée compris entre 0,25 et 0,75.

4. Procédé selon l'une des revendications 1 à 3, caractérisé par le fait qu'à l'étape (a), on ajoute l'ammoniaque au départ.

5. Procédé selon l'une des revendications 1 à 3, caractérisé par le fait qu'à l'étape (a), on ajoute l'ammoniaque au fur et à mesure de l'avancement de la réaction.

6. Procédé selon l'une des revendications 1 à 5, caractérisé par le fait qu'à l'étape (a), on ajoute du métabisulfite de sodium au milieu, à raison de 0,25 à 0,75% en poids par rapport à la résine totale.

7. Procédé selon l'une des revendications 1 à 6, caractérisé par le fait que l'on conduit l'étape (a) à un pH d'environ 6 à 8.

8. Procédé selon l'une des revendications 1 à 7, caractérisé par le fait qu'à l'étape (b), on ajoute de l'urée pour abaisser le rapport molaire formol sur groupement NH₂ à une valeur comprise entre 1,2 et 1,3.

9. Procédé selon l'une des revendications 1 à 8, caractérisé par le fait qu'à l'étape (b), on ajoute l'urée à une température de 60 à 90°C, à un pH de l'ordre de 6-7, pendant 5-25 mn, le pH chutant alors à une valeur de l'ordre de 4-5, à laquelle est réalisée la condensation, laquelle est arrêtée lorsque la viscosité à 20°C de la résine est de 50-150 mPa.s.

10. Procédé selon l'une des revendications 1 à 9, caractérisé par le fait qu'à l'étape (d), on ajoute l'urée à une température de l'ordre de 20 à 60°C.

11. Procédé selon l'une des revendications 1 à 10, caractérisé par le fait qu'à l'étape (d), on ajoute de l'eau de façon à obtenir un extrait sec de 45-65%.

12. Utilisation de la résine urée-formol-ammoniaque obtenue par le procédé tel que défini à l'une des revendications 1 à 11 comme résine aminoplaste thermodurcissable d'imprégnation.
